Europäisches Patentamt

European Patent Office

Office européen des brevets

(11) Publication number: **0 163 149**
**B1**

(12) **EUROPEAN PATENT SPECIFICATION**

(45) Date of publication of patent specification: **17.08.88**

(51) Int. Cl.⁴: **H 01 H 13/70**

(21) Application number: **85105247.2**

(22) Date of filing: **30.04.85**

(54) **Membrane keyboard switch mounting.**

(30) Priority: **29.05.84 US 614614**

(43) Date of publication of application:
**04.12.85 Bulletin 85/49**

(45) Publication of the grant of the patent:
**17.08.88 Bulletin 88/33**

(84) Designated Contracting States:
**DE FR GB IT**

(56) References cited:
**US-A-4 118 611**
**US-A-4 249 044**
**US-A-4 365 130**

(73) Proprietor: **International Business Machines Corporation**
**Old Orchard Road**
**Armonk, N.Y. 10504 (US)**

(72) Inventor: **Gostomski, Dominic Anthony, Jr**
**117 Bayberry Road**
**Versailles Kentucky 40383 (US)**
Inventor: **Price, Jerry Glenn**
**Route 5, Hutchison Road**
**Paris Kentucky 40361 (US)**

(74) Representative: **Siccardi, Louis**
**Compagnie IBM France Département de Propriété Intellectuelle**
**F-06610 La Gaude (FR)**

Courier Press, Leamington Spa, England.

# Description

## Field of Invention

The invention relates to the field of membrane keyboards, the manufacture and mounting of membrane keyboard sandwiches onto a rigid support member or plate.

## Background of the Invention

Prior art attempts to mount the membrane keyboard sandwich structure onto a rigid support plate involved an extensive, substantially complete adhesive layer applied between the bottom surface of the membrane sandwich and the plate.

The complete or substantially complete adhesive layer used in the prior art to attach the membrane keyboard sandwich to the rigid support plate provides less than desirable results inasmuch as air bubbles may be trapped within the large adhesive region and effectively force the bottom layer of the sandwich away from the backing plate.

This results in a potential failure of the keyboard if the bubble is of sufficient size and location to force the bottom layer contact out of the plane of the support plate and thereby either cause an undesired contact between the contacts of that switch location or reduce the amount of distance between the two membrane mounted switch contacts thereby raising the possibility of unintentional contacts being made on an intermittent basis.

The problem of assembling the membrane keyboard sandwich onto the rigid support plate is further complicated when the sandwich is attached to the concave surface of a curved rigid support plate since forces may be transmitted to a key switch position through the membrane keyboard sandwich. This problem is caused by the inability to contact the entire adhesive layer to the support plate simultaneously when being assembled.

The venting of the individual cavities positioned between the electrical contacts of the membrane switch structure involved the forming of channels leading away from the cavities and passing into passages formed in the adhesive layer intermediate one membrane and the spacer layer and passing out to the atmosphere. US-A-4,249,044 discloses such a series of channels for equalizing pressure interiorly of the switch with the atmosphere. This document also discloses a chamber of air formed under the switch contact at the key switch position, which separates the bottom layer from its support member.

It further discloses the membrane switch structure attached to a support plate by an adhesive pattern which adheres the switch structure substantially completely around the periphery of the switch structure. Also adhesive, in a layer, is placed between the plate and the bottom layer of the switch structure but leaves regions of no adhesive under the switch site. This lack of adhesive attachment under the switch site leads to errors in that the bottom layer and its electrical contact may be displaced from the design location and not make and break as designed. Air pressure increase in the chamber beneath the switch position causes the upward movement of the electrical contact toward the electrical contact on the top layer of the switch structure, reducing the electrical contact separation or closing the switch.

## Summary of the Invention

The invention allows the use of glue spots beneath the switch sites without inhibiting the exhaustion of the air from the cavities at each switch site.

Adhesive is placed underneath each of the keyswitch positions to fix spacially the bottom electrical contact. A partial peripheral adhesive band acts to fix the sandwich relative to the plate and prevent spilled beverages or other fluid from entering the membrane sandwich, while the adhesive spots underneath the keyswitch positions stabilize the bottom contact of the keyswitch spacially with respect to the rigid support plate.

The problems described above may be overcome in part by utilizing an adhesive layer in the membrane sandwich which does not have a series of channels and passageways formed to exhaust the cavities located at the switch positions. The exhausting is accomplished by passing the air from the cavity through the bottom membrane layer toward the rigid support plate into a region which is not adhesively engaged with the membrane sandwich, and which is not underlying the electrical switch contact at the key switch position.

In order to accept the air exhausted from the cavity when the switch is made, the cavity is exhausted through the bottom layer into the region between the bottom layer and the rigid support plate. The rigid support plate is adhesively adhered to the bottom layer of the membrane sandwich by a pattern of precisely positioned adhesive spots. The bottom layer of the membrane sandwich is adhesively attached to the base plate around only three sides of its periphery so that the exhausted air pressure is freely equalized to atmospheric pressure.

The unglued areas are then capable of exhausting expressed air, from the cavities at the switch positions, to the atmosphere through the unglued side of the membrane sandwich. By utilizing the unglued areas in the region between the bottom membrane and the rigid support plate to exhaust air the need to provide elaborate venting channels is eliminated.

## Brief Description of the Drawings

Fig. 1 is an exploded perspective view of a part of the membrane keyboard with the rigid support plate, and keybuttons and top frame included.

Fig. 2 is a plan view of the membrane switch structure showing the adhesive pattern.

Fig. 3 is a detailed cut away perspective view of one typical key position on the membrane keyboard with the keybutton at rest.

Fig. 4 is a detailed perspective cut away view of one typical key position on the membrane keyboard with the keybutton depressed.

Fig. 5 is a sectional view through line 5-5 of Fig. 2 of the membrane switch structure as assembled and adhesively adhered to the rigid support.

Detailed Description of the Invention

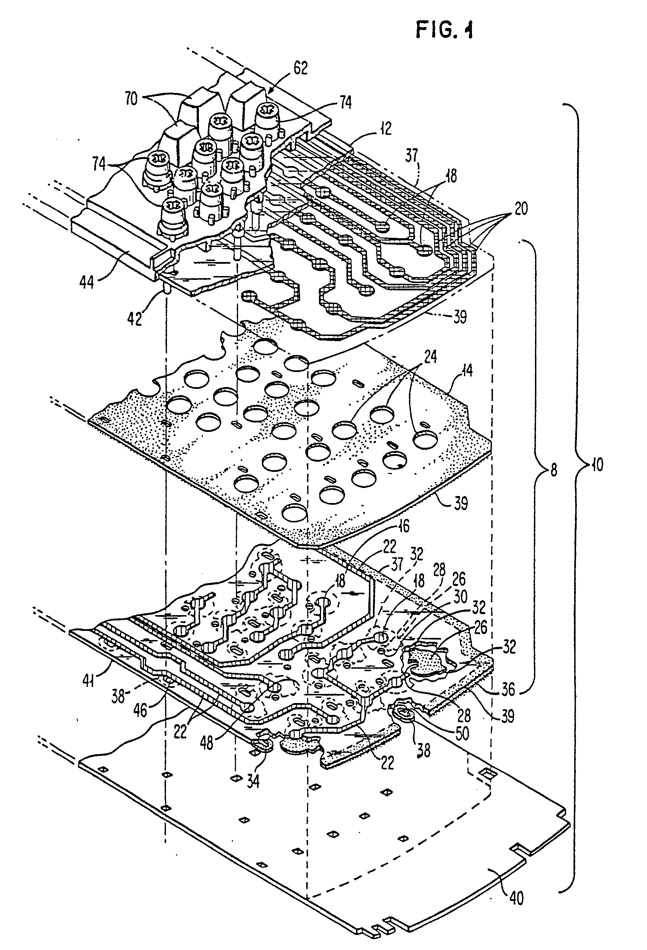

Referring to Fig. 1, the membrane keyboard structure 10 comprises a frame 44 supporting keybuttons 70, a three layer membrane sandwich 8 and a support plate 40.

The membrane sandwich 8 includes a top layer 12 which carries on the underside thereof a pattern of switch contacts 18 and conductors which act as drive lines 20 for the switch contacts 18. The switch contacts 18 and drive lines 20 are formed by silk screening a paste containing a polyester binder and a relatively high percentage of silver particles (commonly referred to as silver ink) onto a piece of non-conductive flexible sheet material such as "Mylar" which is the trademark of Du Pont Corporation for polyethylene terephtalate. Other non-conductive plastic sheets can be used equally as well.

Adhesively adhered to the bottom surface of top layer 12 (the surface with the electrical contacts and conductors) is a spacer 14 which is a sheet of "Mylar" or similar material having a series of holes 24 punched therein corresponding in location to the switch contact 18 positions of the upper layer 12. Typically, both sides of this spacer 14 are coated with an adhesive.

The bottom layer 16 of the membrane sandwich 8 is a sheet of "Mylar" having deposited thereon, a series of switch contacts 18 and sense lines 22 through a silk screening process as described with respect to top layer 12.

Alternatively, a thick layer of adhesive may be selectively deposited between the bottom surface of layer 12 and the top surface of bottom layer 16 such that openings in the adhesive are in register with the switch contacts 18 on the top layer 12 and bottom layer 16. The thick layer of adhesive would serve in lieu of a separate spacer layer 14.

A switch closure occurs when the top layer 12 of the membrane sandwich 8 is deflected downward into hole 24 and the switch contact 18 on the top layer 12 contacts the switch contact 18 on the bottom layer 16, thereby establishing continuity between drive line 20 and sense line 22.

During operation, a series of drive signals are sequentially provided over each of the drive lines 22. The sense lines 22 are simultaneously interrogated to determine whether a signal is present on any of the lines 22. If present, the identity of the sense line 22, together with the identity of the drive line 20 actuated with the sequential drive signal will define the switch position 19 at which the contacts 18 are made.

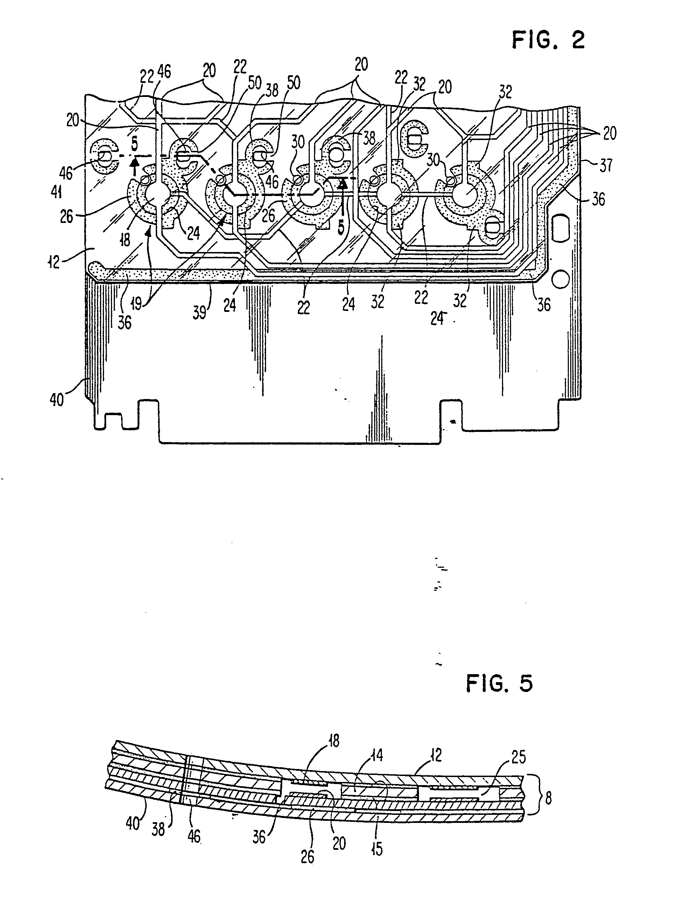

To prevent the buckling of the bottom layer 16 and to accurately position the switch contacts 18 thereon relative to the rigid support plate 40, adhesive spots 26 are used. As shown in Figs. 1 and 2 substantially surrounding and underlying each switch contact 18, on the back of the bottom layer 16 is a spot of adhesive 26 which has been selectively placed thereon. The spot of adhesive 26 is substantially circular in shape with a small sector 28, extending from the periphery of the region inward, being left without adhesive.

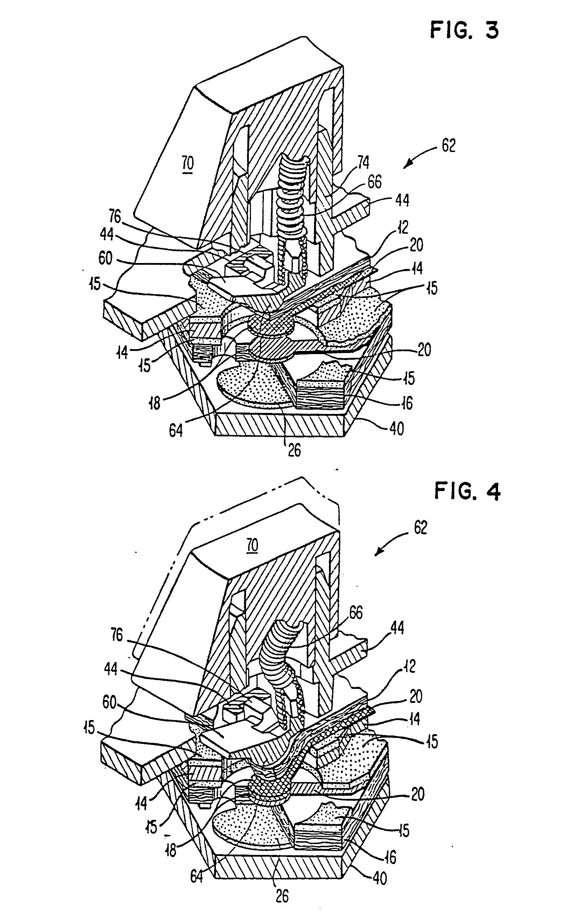

In this sector 28, a small hole 30 has been punched extending completely through the bottom layer 16. In addition to the substantially circular spot of adhesive 26, small regions are extended outward from the circumference of the adhesive spot 26 appearing to form tabs 32, to form a base for a pivot plate 60 as seen in Figs. 3 and 4.

To prevent the failure of the keyboard associated with the spilling of beverages on the keyboard 10 in the work environment, a band of adhesive 36 is deposited around the periphery on three sides of the bottom layer 16. The band of adhesive 36 extends across the top side edge 37 of the membrane sandwich 8 and down both sides 39. The keyboard 10 is typically positioned with the top edge 37 elevated, thus allowing the bottom edge to remain open while still protecting the keyboard structure 10 from such spills.

Other patterns of adhesive 38 are formed as incomplete annular or elongated shaped rings which serve to adhere the bottom layer 16 to the rigid support plate 40 in regions where a tenon 42 from the frame 44 of the keyboard will ultimately extend through and engage with the rigid support plate 40.

With the membrane sandwich 8 of the keyboard structure 10 fully assembled on the rigid support plate 40 by adhesively engaging each of the adjacent layers 12, 14, 16 to each other, the switch contacts 18 on the bottom layer 16 of the membrane sandwich 8 are firmly located relative to the rigid support plate 40. The areas between the adhesive spots 26 and intermediate the bottom layer 16 and the rigid support plate 40 act to allow the free flow to the atmosphere of the air which is expressed from the cavities 25 upon switch closure. The cavities 25 are formed by holes 24 and the top layer 12 and bottom layer 16.

Since the bottom edge 41 of the membrane sandwich 8/rigid support plate 40 assembly is open to the atmosphere, there exists an unrestricted air flow to the atmosphere.

Additionally, the holes 46 which are formed within the annular or elongated shaped open rings of adhesive 38 permit exhausting of the air from the englued regions 48 between the adhesive spots 26 through the gap 50 in the ring 38 and out to the atmosphere through the hole 46 punched through the entire sandwich 8.

By firmly adhering the portion of the bottom layer 16 of the sandwich 8 to the rigid support plate 40 in a region beneath each of the switch contact 18 of the key switch position 19, the bottom switch contact 18 is then fixed rigidly insuring that the switch contact 18 is not forced upward by a trapped air bubble or other object trapped under bottom layer 16 during assembly, thereby causing a spurious signal to be generated by inadvertent closure of the contact 18. The small hole 30 formed through the bottom layer 16 of the keyboard structure 10 for exhausting the displaced air from the cavities 25 of the membrane sandwich 8, together with the adhesive pattern underneath the bottom layer 18, eliminates the need for venting passages to be formed in the spacer and communicated with the outside atmosphere.

As shown in Figures 1 and 5, the rigid support plate 40 is curved to position the keybuttons 70 such that their top surfaces conform to a surface described by the fingers of an operator as the fingers are extended to operate the keybuttons 70. This curvature makes the assembly of the membrane sandwich 8 and support plate 40 very troublesome when using the prior art complete layer of adhesive, but the assembly problems of entrapped air bubbles is alleviated when the spot pattern of adhesive is used.

Referring to Fig. 1, the tabular extensions 32 extending out from the otherwise substantially circular adhesive spots 26 insure that the membrane sandwich 8 is firmly adhered to the rigid support plate 40 in regions where a pivot plate 60, as in Figs. 3 and 4, of the key assembly 62 rests so that no inadvertent buckling or bubble will prevent the actuator 60 from sitting squarely on the membrane sandwich 8. This insures the pivot plate 60 will function properly in forcing the contacts 18 together to cause the making of the contacts 18.

Referring to Figures 3 and 4, the structure of the actuator assembly 62 is illustrated. The frame 44 of the keyboard structure 10 supports a keybutton 70. The frame 44 includes surfaces which guide the keybutton 70 and these surfaces make up the chimney 74. The frame 44 also confines, underneath the frame 44, the pivot plate 60. The pivot plate 60 is formed with two pivot tabs 76 confined by the frame 44 and resting on the top of the top layer 12. The pivot tabs 76 are in register with the tabs 32 of the adhesive spot 26 and thus have solid surfaces to engage since the adhesive spots 26 and tabs 32 extend sufficiently outward past the hole 24 to adhere the membrane sandwich 8 to the rigid support plate 40 where there are no voids in the membrane sandwich 8. The firm footing for the pivot tabs 76 helps to insure proper operation of the pivot plate 60.

To deflect the top layer 12 and the associated switch contact 18 to contact the switch contact 18 of the bottom layer 16, the pivot plate 60 is formed with a protusion 64 on the bottom side thereof for engaging the top layer 12 and forcing it downward through hole 24 to contact the switch contact 18 on the bottom layer 16.

The pivoting of pivot plate 60 is initiated by spring 66 which extends between the pivot plate 60 and the keybutton 70 as is fully described in U-A-4,118,611.

The switch contacts 18 are closed when the keybutton 70 is depressed. As the keybutton 70 travels downward, the spring 66 is compression loaded until it deflects and buckles. As it buckles, the moment caused by buckling pivots the pivot plate 60 about its pivot tabs 76 and forces the protusion 64 downward to deflect the switch contact 18 on the top layer 12 into contact with switch contact 18 on the bottom layer 16, making continuity between a drive line 20 and a sense line 22.

When assembled, the keyboard frame is positioned on and conforms in curvature to the membrane sandwich 8 and rigid support plate 40 and is held in firm contact with the membrane sandwich 8 by tenons 42 which extend through holes 46 and then are hot upset or otherwise retained.

The regions of adhesive 26 stabilize the electrical contacts and leave open substantial regions between the bottom layer 16 and frame 40 to allow unrestricted air flow exterior to the membrane sandwich 8, thereby improving stability, manufacturability and reliability of the membrane sandwich 8.

The adhesive used in the membrane sandwich 8 is an acrylic adhesive and preferably ethyl hexyl acrylate, while the adhesive between the support plate 40 and the bottom layer 16 is a styrene butadiene rubber.

Typically the bottom layer 16 is approximately 0.175mm thick and the top layer 12 is approximately 0.075mm thick. The two layers are separated by about 0.150mm which is occupied by the spacer 14 and adhesive layers thereon.

The selection of the adhesives is made solely on the physical properties thereof and not based on their chemical properties. Adequate adhesion to firmly adhere the adjacent surfaces is the primary consideration.

## Claims

1. A keyboard comprising a matrix multilayer switch (8) comprising:

a first flexible sheet (16) with a first and second surface with electrical circuit paths (22) and plural switch contacts (18) deposited on said first surface thereof;

a second flexible sheet (12) with electrical circuit paths (20) and plural switch contacts (18) deposited on a first surface thereof;

a spacer sheet (14) with at least a hole (24) formed therein, positioned between said first and second flexible sheets (16, 12) and with said aperture (24) aligned with portions of said electrical circuits on each of said sheets to form a passage through which said circuit on said second flexible sheet (12) may contact said circuit on said first flexible sheet (16) and with said first surfaces in face-to-face relation with faces of said spacer,

at least a zone of adhesive interposed between said spacer (14) and each of said flexible sheets (16, 12) to form a multilayer structure with each of said spacer and sheets restricted from movement with respect to each other in the plane of said spacer sheet; and

a rigid support plate (40) and adhesive engaging a first surface thereof, said multilayer switch (8) adhesively attached to said rigid support plate (40),

an actuator means (62) aligned with and operable manually to actuate said multilayer switch (8), comprising a keybutton (70) and a switch engaging member (60) operable upon displacement of said keybutton (70) to deflect switch contacts (18) on said second sheet into contact with said switch contacts (18) on said first sheet, said keyboard being characterized by said adhesive engaging said rigid support plate (40) comprising at least a spot (26) of adhesive localized at and positioned between said support plate (40) and said multilayer switch (18) and adjacent said each of said switch contacts (18) and engaging said second surface of said first flexible sheet (16), thereby stabilizing said electrical circuit path on said first flexible sheet (16), the substantial portion of the remainder of said second surface remaining without adhesive.

2. The keyboard of claim 1 wherein said rigid support plate (40) is curved to a radius approximately the curve defined by the fingers of an operator as said fingers are extended to engage said keybuttons (70) and where said plural switch contacts (18) on said first sheet (16) are fixedly positioned relative to said plate (40) by said spots (26) of adhesive between said plate (40) and said first sheet (16).

3. The keyboard of claim 2 wherein said spot (26) of adhesive is substantially circular and is positioned between and aligned with said switch contacts (18).

4. The keyboard of claim 3 wherein said first flexible sheet (16) has formed therein a hole (30) extending from said first side to said second side thereof and communicating with said aperture (24) and an area between said first flexible sheet (16) and said rigid support plate (40) where no adhesive exists.

5. The keyboard of claim 4 wherein said adhesive circular pattern (26) comprises a sector, which has no adhesive, corresponding in location to the position of said hole (30), thereby creating a communication between said hole (30) and said region of no adhesive between said first flexible sheet (16) and said rigid support plate (40).

6. The keyboard of claim 2 wherein said multilayer switch (8) is further adhesively attached to said support plate (40) by adhesive deposited in a substantially continuous band adjacent three edges of said first flexible sheet (16) and intermediate said sheet (16) and said rigid support plate (40).

7. The keyboard of claim 3 wherein said multilayer switch (8) is further adhesively attached to said rigid support plate (40) by adhesive deposited in a substantially continuous band adjacent three edges of said first flexible sheet (16) and intermediate said first sheet and said rigid support plate.

8. The keyboard of claim 4 further comprising additional regions (38) of adhesive extending generally outward from said region of adhesive, thereby fixedly adhering said first flexible sheet (16) to said rigid support plate (40) in regions where objects may engage said membrane switch (8) without causing one of said switch contacts (18) to contact the other of said switch contacts.

9. The keyboard of claim 1 further comprising a frame (44) for supporting said actuator means (62) and said frame attached through said membrane switch and to said rigid support plate.

10. The keyboard of claim 9 wherein said frame further comprises tenons (42) extending through said rigid support plate (40) and deformed to prevent removal of said frame (44) from said plate (40).

**Patentansprüche**

1. Tastatur mit:
einem Mehrschicht-Matrixschalter (8), enthaltend:

ein erstes biegsames Blatt (16) mit einer ersten und zweiten Fläche mit elektrischen Leiterbahnen (22) und mehreren Schaltkontakten (18), die auf der ersten der besagten Flächen angeordnet sind;

einem zweiten biegsamen Blatt (12) mit elektrischen Leiterbahnen (20) und mehreren Schalterwegen (18), die auf einer ersten Fläche davon angeordnet sind;

einem Abstandsblatt (14) mit mindestens einem Loch (24) das darin gebildet und zwischen dem besagten ersten und zweiten biegsamen Blatt (16, 12) positioniert ist, wobei die besagte Öffnung (24) mit Abschnitten der besagten elektrischen Leitungen auf jedem der besagten Blätter zur Deckung gelangt, un einen Durchgang zu bilden, durch den die besagte Leitung auf dem besagten zweiten biegsamen Blatt (12) in Kontakt mit dem besagten Leiter auf dem besagten ersten biegsamen Blatt (16) und mit den besagten ersten Flächen gelangen kann, in Gegenüberstellung mit Seiten des besagten Abstandsteils;

mindestens einer Zone Haftmittel, das zwischen dem besagten Abstandsteil (14) und jedem der besagten flexiblen Blätter (16, 12) eingesetzt ist, un mit dem besagten Abstandsteil und mit dem besagten Blättern eine Mehrschichtstruktur zu bilden, die eine Bewegung der einzelnen Teile zueinander in der Ebene des besagten Abstandsblattes verhindert; und

ein starres Halteschild (40) und ein Klebemittel, das in eine erste Fläche davon eingreift, wobei besager Mehrschichtschalter (8) auf dem besagten starren Trägerschild (40) haftend befestigt ist;

ein Betätigungselement (62), ausgerichtet mit dem besagten Mehrschichtschalter (8) und für seine Betätigung von Hand zu bewegen, mit einem Tastknopf (70) und einem Schalter eingreifenden Glied (60), das sich mit Bewegung des besagten Tastknopfes (70) betätigen lässt, um die Schaltkontakte (18) auf dem besagten zweiten Blatt in Kontakt mit besagten Schaltkontakten (18) auf besagtem ersten Blatt zu bringen, wobei besagte Tastatur dadurch gekennzeichnet ist, dass das besagte Klebband, das in die besagte starre Halterplatte (40) eingreift, mindestens einen Punkt (26) Klebemittel enthält, das zwischen dem besagten Halterschild (40) und dem besagten Mehrschichtschalter (18) angeordnet und positioniert ist, und den besagten anliegenden Schaltkontakten (18), und in die besagte zweite Fläche des besagten ersten biegsamen Blattes (16) eingreift, wodurch die besagte elektrische Leiterbahn auf besagtem ersten biegsamen Blatt (16) stabilisiert wird, und der grösste Abschnitt des Restes der besagten zweiten Fläche ohne Klebstoff bleibt.

2. Tastatur gemäss Anspruch 1, in der besagtes starres Halteschild (40) gekrümmt ist, mit einem Radius, der annähernd der Kurve entspricht, die durch die Finger eines Bedieners beschrieben werden, wenn besagte Finger ausgestreckt werden, um die besagten Tasten (70) zu betätigen, und in dem die besagten mehreren Schaltkontakte (18) auf dem besagten ersten Blatt (16) · fest in Bezug auf das bezagte Schild (40) positioniert sind, mit dem besagten Klebstofflecken (26) zwischen dem besagten Schild (40) und dem besagten ersten Blatt (16).

3. Tastatur gemäss Anspruch 2, in der besagter Klebstoffffleck (26) wesentlich kreisförmig ausgebildet und zwischen den besagten Schaltkontakten (18) angeordnet und nach innen gerichtet ist.

4. Tastatur gemäss Anspruch 3, in der besagtes erstes biegsames Blatt (16) darin ein Loch (30) gebildet hat, das sich von der besagten ersten Seite auf die besagte zweite Seite erstreckt und mit besagter Öffnung (24) und einer Zone zwischen dem besagten ersten biegsamen Blatt (16) und dem besagten starren Halteschild (40) in Verbindung steht, wo kein Klebmittel vorhanden ist.

5. Tastatur gemäss Anspruch 4, in der besagtes kreisförmiges Klebstoffmuster (26) einen Abschnitt ohne Klebstoff enthält, der in der Stellung der Position des besagten Loches (30) entspricht und dadurch eine Verbindung zwischen dem besagten Loch (30) und der besagten klebstofffreien Zone zwischen dem besagten ersten biegsamen Blatt (16) und dem besagten starren Halteschild (40) herstellt.

6. Tastatur gemäss Anspruch 2, in der besagter Mehrschichtschalter (8) ausserdem mit Klebstoff mit besagter Halteplatte (40) verbunden ist, durch Klebstoff, der in wesentlich durchgehendem Streifen an drei Rändern des besagten ersten biegsamen Blattes (16) aufgetragen ist, und einem besagten Zwischenblatt (16) und besagtem starrem Halteschild (40).

7. Tastatur gemäss Anspruch 3, in der besagter Mehrschichtschalter (8) ausserdem mit einem Klebstreifen mit besagtem starrem Halteschild (40) verbunden ist, durch ein Klebmittel, das in wesentlich durchgehendem Band aufgetragen ist, das an drei Seiten an besagtem erstem biegsamen Blatt (16) anliegt, und zwischen dem besagten ersten Blatt und dem besagten starren Halteschild.

8. Tastatur gemäss Anspruch 4, ferner zusätzliche Klebstoffzonen (38) enthaltend, die sich gewöhnlich von der besagten Klebstoffzone nach aussen erstrecken, sodass das besagte erste biegsame Blatt (16) fest mit dem besagten starren Halteschild (40) verbunden ist, in Zonen, in denen Gegenstände in besagtem Membranschalter (8) eingreifen könnten, ohne dass dadurch einer der besagten Schaltkontakte (18) mit einem anderen der besagten Schaltkontakte in Verbindung kommt.

9. Tastatur gemäss Anspruch 1, ferner einen Rahmen (44) enthaltend, um solche Betätigungsmittel (62) zu enthalten, und besagte Rahmen durch besagten Membranschalter und an das besagte starre Halteschild angeschlossen sind.

10. Die Tastatur gemäss Anspruch 9, in der der besagte Rahmen ferner Federn (42) enthält, die durch den besagten starren Halteschild (40) hervorstehen und die verformt sind, um die Rückstellung des besagten Rahmens (44) vom besagten Schild (40) zu verhindern.

**Revendications**

1. Un clavier comprenant:
un commutateur à matrice multicouche (8) comprenant:
une première feuille flexible (16) dont les première et seconde surfaces présentent des chemins de circuit électrique (22) et plusieurs contacts de commutation (18) déposés sur ladite première surface de ladite première feuille flexible,
une seconde feuille flexible (12) comportant des chemins de circuit électrique (20) et plusieurs contacts de commutation (18) déposés sur une première surface de ladite seconde feuille flexible,
une feuille d'espacement (14) qui comporte au moins un trou (24), disposée entre lesdites première et seconde feuilles flexibles (16, 12), ledit trou (24) étant aligné avec des parties desdits circuits électriques sur chacune desdites feuilles pour former un passage au travers duquel ledit circuit sur ladite seconde feuille flexible (12) peut être en contact avec ledit circuit sur ladite première feuille flexible (16) et avec lesdites premières surfaces disposées face à face avec les faces de ladite feuille d'espacement,
au moins une zone d'adhésif intercalée entre ladite feuille d'espacement (14) et chacune desdites feuilles flexibles (16, 12) pour former une structure multicouche avec ladite feuille d'espacement et lesdites feuilles flexibles retenues dans leur mouvement les unes par rapport aux autres dans le plan de ladite feuille d'espacement, et
une plaque de support rigide (40) dont une première surface est recouverte d'adhésif, ledit commutateur multicouche (8) étant fixé par l'adhésif à ladite plaque de support rigide (40),
un moyen de commande (62) aligné avec ledit commutateur multicouche (8) et pouvant être commandé manuellement pour actionner celui-ci, comprenant une touche (70) et un élément de mise en contact (60) entrant en fonction lors du déplacement de ladite touche (70) pour engager les contacts de commutation (18) sur ladite seconde feuille en contact avec lesdits contacts de commutation (18) sur ladite première feuille, ledit clavier étant caractérisé en ce que ledit adhésif est en contact avec ladite plaque de support rigide (40) comprenant au moins un point d'adhésif (26) localisé et positionné entre ladite plaque de support (40) et ledit commutateur multicouche (18) et adjacent à chacun desdits contacts de commutation (18) et avec ladite seconde surface de ladite première feuille flexible (16), ce qui stabilise ainsi ledit chemin de circuit électrique sur ladite première feuille flexible (16), la partie substantielle du reste de ladite seconde surface restant sans adhésif.

2. Le clavier de la revendication 1 dans lequel ladite plaque de support rigide (40) est incurvée selon un rayon qui est approximativement celui de la courbe définie par les doigts d'un opérateur lorsque ceux ci sont tendus pour appuyer sur les touches (70) et dans lequel lesdits contacts de commutation (18) sur ladite première feuille (16) sont établis en position fixe par rapport à ladite plaque (40) par lesdits points d'adhésif (26) entre ladite plaque (40) et ladite première feuille (16).

3. Le clavier de la revendication 2 dans lequel ledit point (26) d'adhésif est pratiquement circulaire et est disposé entre lesdits contacts de commutation (18) et aligné avec ceux ci.

4. Le clavier de la revendication 3 dans lequel ladite première feuille flexible (16) présente un trou (30) entre son premier côté et son second côté et communiquant avec ladite ouverture 24 et une zone entre ladite première feuille flexible (16) et ladite plaque de support rigide (40) où il n'y a pas d'adhésif.

5. Le clavier de la revendication 4 dans lequel ladite configuration circulaire adhésive (26) comprend un secteur sans adhésif dont l'emplacement correspond à la position dudit trou (30), ce qui crée ainsi une communication entre ledit trou (30) et ladite région sans adhésif entre ladite première feuille flexible (16) et ladite plaque de support rigide (40).

6. Le clavier de la revendication 2 dans lequel ledit commutateur multicouche (8) est en outre fixé par adhésif à ladite plaque de support (40) par de l'adhésif déposé en une bande pratiquement continue adjacente aux trois bords de ladite première feuille flexible (16) et en position intermédiaire entre ladite feuille (16) et ladite plaque de support rigide (40).

7. Le clavier de la revendication 3 dans lequel ledit commutateur multicouche (8) est en outre fixé par adhésif à ladite plaque de support rigide (40) par de l'adhésif déposé en une bande pratiquement continue adjacente aux trois bords de ladite première feuille flexible (16) et en position intermédiaire entre ladite première feuille et ladite plaque de support rigide.

8. Le clavier de la revendication 4 comprenant en outre des régions supplémentaires (38) d'adhésif s'étendant généralement vers l'extérieur de ladite région d'adhésif, ce qui provoque ainsi la fixation par adhésif de ladite première feuille flexible (16) à ladite plaque de support rigide (40) dans des régions où des objets peuvent entrer en contact avec ledit commutateur à membrane (8) sans provoquer le contact de l'un desdits contacts de commutation (18) avec l'autre desdits contacts de commutation.

9. Le clavier de la revendication 1 comprenant en outre un cadre (44) pour supporter ledit moyen de commande (62), ledit cadre étant étant fixé audit commutateur à membrane et à ladite plaque de support rigide.

10. Le clavier de la revendication 9 dans lequel ledit cadre comprend en outre des goujons (42) qui traversent ladite plaque de support rigide (40) et qui sont déformés pour interdire le retrait dudit cadre (44) de ladite plaque (40).

## FIG. 1

FIG. 2

FIG. 5

FIG. 3

FIG. 4